# EUROPÄISCHE PATENTSCHRIFT

(11) **EP 0 928 931 B1**
(45) Veröffentlichungstag und Bekanntmachung des Hinweises auf die Patenterteilung: **06.05.2004**
(21) Anmeldenummer: 99100008.4
(22) Anmeldetag: 02.01.1999
(51) Int. Cl.: F24F 7/06

(54) **Lüftungsanlage**
Ventilation system
Dispositif de ventilation

(30) Priorität: 08.01.1998 CH 2198
(43) Veröffentlichungstag der Anmeldung: 14.07.1999
(73) Patentinhaber: ZURECON AG, CH-8003 Zürich (CH)
(72) Erfinder: Gerster, Max, Dr. oec., 8185 Winkel (CH)
(74) Vertreter: Kägi, Otto

(56) Entgegenhaltungen:
- EP-A- 0 312 864
- FR-A- 2 179 517
- FR-A- 2 237 133
- US-A- 3 789 747
- PATENT ABSTRACTS OF JAPAN vol. 098, no. 001, 30. Januar 1998 & JP 09 243127 A (OSAKA GAS CO LTD;HARMAN CO LTD), 16. September 1997

## Beschreibung

Die Erfindung betrifft eine Lüftungsanlage zur Bedienung mehrerer Lüftungsstellen, die aus untereinander verbundenen Teilaggregaten, wie Ventilatorteil, Filter, Wärmetauscher usw. besteht. Unter "Lüftung" ist im Zusammenhang mit der vorliegenden Erfindung wahlweise a) nur Entlüftung oder b) sowohl Entlüftung als auch Belüftung zu verstehen.

Es sind Lüftungsanlagen dieser Art bekannt, bei denen den verschiedenen Lüftungsstellen (z.B. mehreren Räumen einer Wohnung) zugeordnete Abluft-Ventilatoren örtlich zu einer Baugruppe (Ventilatorteil) zusammengefasst sind. Die Dokumente FR-A-2 179 517 und FR-A-2 237 133 zeigen einen Ventilatorkasten mit mehreren Abluftanschlüssen, einem einzigen, allen Lüftungsstellen gemeinsamen Ventilator und einer einzigen Fortluftöffnung. Im einen Fall kann der Ventilator mit zwei verschiedenen Drehzahlen laufen, im anderen Fall ist einer der Abluftanschlüsse mit einer steuerbaren Drosselklappe versehen. Von einem solchen Ventilatorteil sind zu den genannten Lüftungsstellen bzw. Räumen individuelle Lüftungsleitungen zu führen. Häufig werden an Lüftungsanlagen jedoch zusätzlich zur Entlüftung weitere Anforderungen gestellt. Entsprechende zusätzliche Aggregate, wie Filter, Wärmetauscher, Frischluftventilatoren usw. werden dann dem Abluft-Ventilatorteil beigestellt und sind mit diesem bzw. untereinander mittels flexiblen Rohren oder Luftkanälen zu verbinden.

Solche bekannte Anlagen erfordern bei der Erstellung und auch Im Unterhalt einen grossen Aufwand. Die Abluft (Fortluft) wird in der Regel über das Gebäudedach abgeführt, weshalb die Aggregate meist im Dachraum aufgestellt werden. Der Gesamtaufbau und der Raumbedarf solcher Anlagen ist je nach Ausbau sehr unterschiedlich. Vor allem wird eine mehr oder weniger ausgedehnte Sockelplatte benötigt, und die Führung der Luftleitungen ist wegen den variablen Anschlussstellen von Fall zu Fall verschieden, was die Planung und Ausführung erheblich erschwert. Die elektrischen Versorgungs- und Steuerleitungen sind ebenfalls kompliziert zu planen und zu installieren.

Mit der Erfindung werden eine einfache und rasche Erstellung, geringere Anlage- und Unterhaltskosten und vor allem eine stark vereinfachte Planung von Lüftungsanlagen der eingangs genannten Art angestrebt.

Diese Aufgabe wird erfindungsgemäss dadurch gelöst, dass über einem Basisaggregat für eine Gruppe von Lüftungsstellen mindestens ein Zusatzaggregat turmartig aufgebaut und über steckbare Luftstutzen unmittelbar verbunden ist, wobei das Basisaggregat für jede Lüftungsstelle einen Abluftventilator sowie je mindestens einen Abluftanschluss und je einen an der Oberseite des Aggregats angeordneten Fortluftstutzen aufweist.

Mit diesen erfindungsgemässen Merkmalen ausgeführte Lüftungsanlagen haben insbesondere den Vorteil, dass sie - bei gegebener Anzahl Lüftungsstellen und unabhängig von den jeweils benötigten Zusatzaggregaten - immer praktisch dieselbe Grundfläche einnehmen. Überdies befinden sich die Abluftanschlüsse und die Fortluftstutzen im Grundriss gesehen praktisch immer an den gleichen Stellen. Damit gestalten sich die Bau- und Anlagenplanung wie auch die Durchführung nachträglicher Erweiterungen oder Umstellungen äusserst einfach, und es bieten sich für die Aufstellung der Anlage und die Leitungsführung im Gebäude verschiedene Möglichkeiten an. Die Lüftungsanlagen bzw. deren Aggegate können aber auch erheblich kostengünstiger hergestellt und montiert werden, da dank Steckverbindungen innerhalb des turmartigen Aufbaus besondere Zwischenverbindungen entfallen. Insbesondere werden auch der Unterhalt wie z.B. die Reinigung von Luftfiltern durch einfaches Auswechseln der betreffenden Zusatzaggregate erheblich erleichtert und die damit verbundenen Betriebsunterbrüche auf ein Minimum verkürzt. Ferner kann auch das Verlegen der elektrischen Steuerleitungen von und nach den Lüftungsstellen vereinfacht werden, und die Stromversorgung der Ventilatoren kann am Basisaggregat zentralisiert werden. Unter den einzelnen Aggregaten können zudem auch elektrische Steckverbindungen mit Vorteil verwendet werden.

Zweckmässige weitere Ausgestaltungen der erfindungsgemässen, im Patentanspruch 1 definierten Lüftungsanlage sind in den abhängigen Ansprüchen 2 bis 10 angegeben. Mit dem unabhängigen Anspruch 11 wird zudem Schutz für das Basisaggregat allein beansprucht. Nachstehend wird die Erfindung anhand verschiedener Ausführungsbeispiele im Zusammenhang mit der Zeichnung näher erläutert.
- Fig. 1: zeigt schematisch ein erstes Ausführungsbeispiel von der Seite, wobei das Basisaggregat im Vertikalschnitt dargestellt ist;
- Fig. 2: ist die Draufsicht auf das Basisaggregat nach Fig. 1;
- Fig. 3: zeigt eine Variante der Anlage nach Fig. 1 in analoger Darstellung, mit auf dem Basisaggregat angeordnetem, zusätzlichem Abluft-Filteraggregat;
- Fig. 4: zeigt eine Anlagevariante für Wärmerückgewinnung aus der Abluft mittels Wärmetauscheraggregat; und
- Fig. 5: veranschaulicht als weiteres Beispiel eine mit einem zusätzlichen Frischluft-Förderaggregat ergänzte Lüftungsanlage.

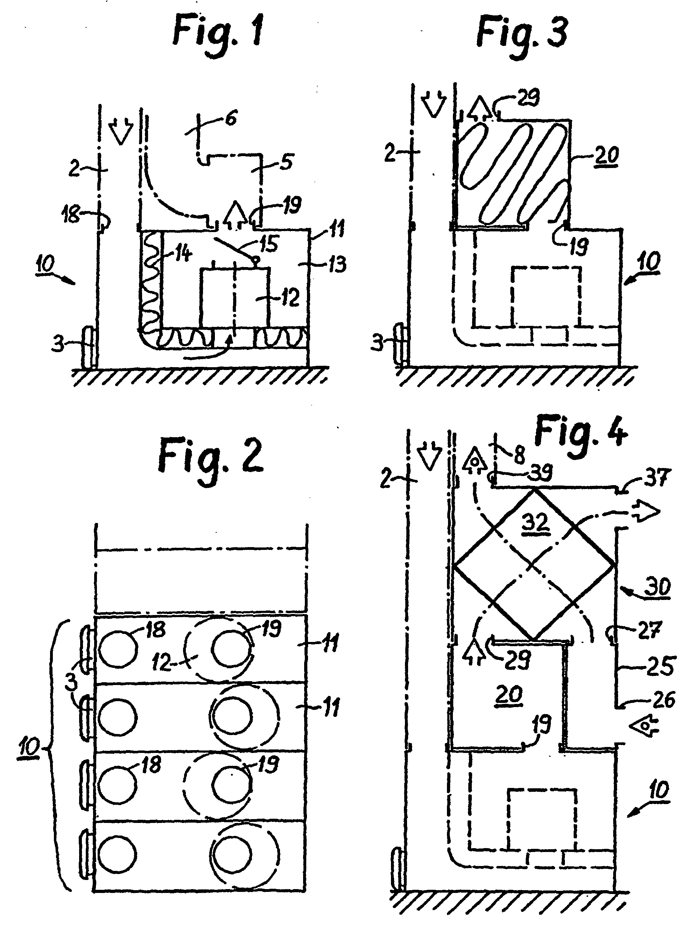

Die Lüftungsanlage nach Fig. 1 und 2 ist zur Bedienung einer Gruppe von (nicht dargestellten) Lüftungsstellen vorgesehen, z.B. als Einzelraum-Entlüftung einer Wohnung mit Absaugstellen in Bad, Toilette, Küche, Wohnraum usw. Im vorliegenden Fall sind vier (es können auch weniger oder mehr eine Gruppe bilden) gleichartige Ventilator-Untereinheiten 11 zu einem Basisaggregat 10 zusammengefasst, wobei jeder Lüftungsstelle der Gruppe ein Abluftventilator 12 in einer Untereinheit 11 zugeordnet ist. Die vorzugsweise prismatischen, nebeneinanderstehenden Untereinheiten 11 enthalten je eine mit schalldämmendem Material 14 ausgekleidete Kammer 13, in welcher der Abluftventilator 12 und eine abgangsseitige Rückstauklappe 15 untergebracht sind. Die Klappen 15 sind zweckmässigerweise Schwerkraft-betätigt und verhindern unerwünschte Rückströmungen von Abluft, wenn einzelne Ventilatoren nicht in Betrieb sind. Für jede Lüftungsstelle ist an jeder Untereinheit 11 (mindestens) ein Abluftanschluss vorhanden, an dem die von der Absaugstelle herangeführte Abluftleitung 2 angeschlossen wird; wie dargestellt, sind vorzugsweise zur wahlweisen Benutzung je ein Abluftstutzen 18 an der Oberseite und ein seitlich angeordneter, weiterer (hier verschlossener) Abluftanschluss 3 vorhanden. An der Oberseite des Basisaggregats 10, d.h. an jeder Ventilator-Untereinheit 11, ist ein Fortluftstutzen 19 angeordnet. An den nebeneinanderstehenden Ventilator-Untereinheiten 11 sind die Abluftanschlüsse 3 und 18 und ebenso die Fortluftstutzen 19 je in Reihe nebeneinander angeordnet.

Wie in Fig. 2 angedeutet, können natürlich entsprechend der Anzahl Lüftungsstellen zwei oder mehrere Basisaggregate 10 nebeneinander aufgestellt werden. Ferner ist zu erwähnen, dass die - im übrigen gleich ausgeführten - Untereinheiten 11 allenfalls mit Ventilatoren 12 unterschiedlicher Leistung bestückt werden können, etwa um verschiedene Raumgrössen, Anwendungen (Küche, Wohnraum etc.) bzw. Strömungswiderstände der Abluftleitungen 2 usw. zu berücksichtigen.

Im Falle einer einfachen Lüftungsanlage nach Fig. 1 und 2, bei der lediglich Raumluft abgesaugt und z.B. über das Gebäudedach weggeführt wird, kann, wie in Fig. 1 angedeutet, ein auf das Basisaggregat 10 aufgestecktes Fortluft-Sammelregister 5 vorgesehen sein. Dieses korrespondiert über dichte Steckverbindungen mit sämtlichen Fortluftstutzen 19 des Basisaggregates und leitet die gesammelte Fortluft über eine Fortluftleitung 6 ab.

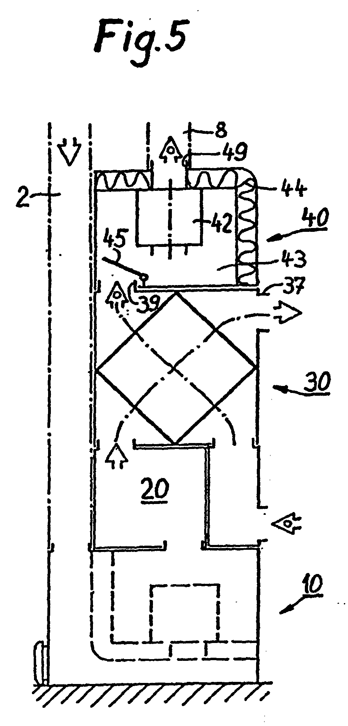

Die Fig. 3 zeigt ein Beispiel einer Lüftungsanlage, bei der das Basisaggregat 10 durch ein Filteraggregat 20 ergänzt ist. Das Basisaggregat 10 ist hier (wie auch in den weiteren Figuren 4 und 5) nur noch vereinfacht dargestellt und entspricht in jeder Beziehung demjenigen nach Fig. 1 und 2. Ein Filteraggregat 20 ist z.B. dann angezeigt, wenn die Fortluft nicht über ein Dach abgeführt werden kann oder soll, beispielsweise wenn die Aufstellung der Anlage in einem Untergeschoss vorgesehen ist und sich eine einfachere und kürzere Fortluft-Ableitung z.B. in einen Hof anbietet.

Das gemäss Fig. 3 über dem Basisaggregat 10 innerhalb von dessen Grundriss (Fig. 2) aufgebaute Filteraggregat 20 korrespondiert unmittelbar mittels Steckverbindungen mit allen Fortluftstutzen 19 an der Oberseite des Basisaggregates. Wiederum an der Oberseite des Filteragreggates 20 befindet sich (mindestens) ein Fortluftstutzen 29, an welchem eine Fortluftleitung anschliessbar ist (nicht dargestellt). Im Filteraggregat braucht die Abluft aus den einzelnen Untereinheiten 11 des Basisaggregates nicht mehr getrennt geführt zu werden. Dies hat den Vorteil des geringeren Filter-Widerstandes, gleichmässiger Verschmutzung und längerer Lebensdauer, da immer die ganze Filterkapazität verfügbar ist, auch wenn die Lüftungsstellen bzw. Abluftventilatoren 12 alternierend in Betrieb sind. Zudem genügt im Prinzip ein einziger (entsprechend dimensionierter) Fortluftstutzen 29, jedoch können mehrere Stutzen zweckmässig sein, beispielsweise damit Fortluftleitungen mit entsprechend kleinerem Durchmesser verwendet werden können.

Fig. 4 zeigt eine gegenüber Fig. 3 nochmals erweiterte Lüftungsanlage. Es ist zusätzlich ein Wärmetauscheraggregat 30 vorhanden, mit welchem der Wärmeinhalt der Abluft teilweise rückgewonnen und dazu verwendet wird, um angesaugte Frischluft vorzuwärmen. Das Aggregat 30, z.B. ein Kreuzstrom-Plattenwärmetauscher bekannter Bauart, ist wie ersichtlich als turmartiger Aufbau auf dem Filteraggregat 20 (nur noch vereinfacht dargestellt) aufgesteckt und korrespondiert mit dessen Fortluftstutzen 29. Die Abluft entweicht oben am Aggregat 30 über (einen oder mehrere) z.B. seitlich angebrachte Fortluftstutzen 37. Die vorzuwärmende Frischluft tritt an Öffnungen an der Unterseite des Aggregates 30 ein und wird an der Oberseite über Austrittstutzen 39 abgeführt, an die Frischluftleitungen 8 nach den einzelnen belüfteten Räumen anschliessbar sind.

Es kann zweckmässig sein, die Frischluft über ein Register 25 einzuleiten, das, wie aus Fig. 4 ersichtlich, neben dem Filteraggregat 20 über dem Basisaggregat 10 angeordnet ist und Eintrittstutzen 26 sowie Austrittstutzen 27 aufweist; die letzteren korrespondieren unmittelbar über Steckverbindungen mit den genannten Eintrittsöffnungen unten am Aggregat 30. Das Frischluftregister 25 kann als einfache Plenumkammer ausgeführt oder mit (nicht dargestellten) Heizeinrichtungen ausgerüstet sein, die ein auf einzelne Lüftungsstellen individuell abgestimmtes, zusätzliches Vorwärmen der Frischluft gestatten. In diesem Fall sind die Frischluftströme durch das Wärmetauscheraggregat 30 getrennt zu führen. Dagegen kann die Abluft in jedem Fall als Gesamtstrom durch den Wärmetauscher geführt werden. Es steht damit immer die ganze Kapazität des Aggregates zur Verfügung, auch wenn nicht alle Lüftungsstellen der Gruppe in Betrieb sind, und ausserdem ergibt sich dadurch ein entsprechend niedriger Strömungswiderstand für die Abluft.

Bei den vorstehend beschriebenen Anlagearianten wird vorausgesetzt, dass die Abluft- und Frischluftströme allein durch die Abluftventilatoren 12 im Basisaggregat 10 aufrechterhalten werden. Insbesondere wird also die Frischluft "passiv", infolge des in den entlüfteten Räumen entstehenden Unterdruckes, angesaugt, z.B. bei der Anlage nach Fig. 4 über das Register 25, Wärmetauscheraggregat 30 und Frischluftleitungen 8. - Es kann jedoch insbesondere bei erhöhten Komfortansprüchen eine aktive Frischluftförderung erwünscht sein. Dies wird z.B. mit einer erweiterten Anlagevariante gemäss Fig. 5 ermöglicht. Wie dargestellt, ist dort ein Frischluft-Förderaggregat 40 auf das Wärmetauscheraggregat 30 aufgesteckt und mit dessen Frischluft-Austrittstutzen 39 mittels dichten Steckanschlüssen unmittelbar verbunden. Wie die übrigen Teilaggregate ist auch das Aggregat 40 so dimensioniert, dass es nicht über die Grundfläche des Basisaggregates 10 (Fig. 2) hinausragt. Das Zusatzaggregat 40 besteht vorzugsweise ähnlich wie das Basisaggregat 10 (und deshalb nicht näher dargestellt) aus nebeneinanderstehenden, in der Regel gleichartigen Untereinheiten. Es enthält für jede Lüftungsstelle einen Frischluftventilator 42 und einen Frischluftstutzen 49, an den die entsprechende Frischluftleitung 8 angeschlossen wird. Zweckmässigerweise (und wieder analog zum Basisaggregat 10) ist jeder Frischluftventilator 42 zusammen mit einer eingangsseitigen Rückstauklappe 45 in einer mit schalldämmendem Material 44 ausgekleideten Kammer 43 angeordnet.

Wie die vorstehend beschriebenen Ausführungsbeispiele zeigen, lassen sich Lüftungsanlagen nach Bedarf modular zusammenstellen. Die zusätzlichen Teilaggregate sind jeweils turmartig auf dem Basisaggregat aufgebaut und über steckbare Luftstutzen unmittelbar verbunden. Die einzelnen Aggregate werden z.B. mittels bekannten Schnellverschlüssen mechanisch verbunden und gesichert. Es versteht sich, dass entsprechend der Gesamtzahl der zu bedienenden Lüftungsstellen mehrere, auch verschieden grosse und je nach Bedarf allenfalls auch unterschiedlich ausgebaute Gruppen gebildet und nebeneinander aufgestellt werden. Innerhalb jeder Gruppe ist dabei - unabhängig von Art und Zahl der Zusatzaggregate - die benötigte Bodenfläche immer gleich derjenigen des Basisaggregates, und die Anschlüsse der ankommenden und abgehenden Luftleitungen sind praktisch immer am gleichen Ort, übersichtlich und einfach. Die Stromversorgungs- und Steuerleitungen, nötigenfalls kombiniert mit Zeitschaltuhren, Drucksensoren usw. können zentralisiert bzw. einfach steckbar am Basisaggregat und an den Zusatzaggregaten integriert werden.

## Patentansprüche

1. Lüftungsanlage zur Bedienung mehrerer Lüftungsstellen,die aus untereinander verbundenen Teilaggregaten, wie Ventilatorteil, Filter, Wärmetauscher usw. besteht,
**dadurch gekennzeichnet, dass** über einem Basisaggregat (10) für eine Gruppe von Lüftungsstellen mindestens ein Zusatzaggregat (5, 20, 30, 40) turmartig aufgebaut und über steckbare Luftstutzen (19, 29, 39) unmittelbar verbunden ist, wobei das Basisaggregat (10) für jede Lüftungsstelle einen Abluftventilator (12) sowie je mindestens einen Abluftanschluss (18, 3) und je einen an der Oberseite des Aggregats angeordneten Fortluftstutzen (19) aufweist.

2. Lüftungsanlage nach Anspruch 1, **dadurch gekennzeichnet, dass** das Basisaggregat (10) mehrere nebeneinanderstehende, gleichartige Ventilator-Untereinheiten (11) umfasst, deren Abluftanschlüsse (18, 3) und Fortluftstutzen (19) je in Reihe nebeneinander angeordnet sind.

3. Lüftungsanlage nach Anspruch 2, **dadurch gekennzeichnet, dass** in jeder Untereinheit (11) der Abluftventilator (12) zusammen mit einer abgangsseitigen Rückstauklappe (15) innerhalb einer schallgedämmten Kammer (13) angeordnet ist.

4. Lüftungsanlage nach Anspruch 1, **dadurch gekennzeichnet, dass** am Basisaggregat (10) für jede Lüftungsstelle ein Abluftanschluss (18) an der Oberseite und ein weiterer, seitlich angeordneter Abluftanschluss (3) zur wahlweisen Benutzung vorgesehen sind.

5. Lüftungsanlage nach Anspruch 1, **gekennzeichnet durch** ein auf das Basisaggregat (10) aufsteckbares, mit dessen Fortluftstutzen (19) korrespondierendes Fortluft-Sammelregister (5).

6. Lüftungsanlage nach Anspruch 1, **gekennzeichnet durch** ein auf das Basisaggregat (10) aufsteckbares, mit dessen Fortluftstutzen (19) korrespondierendes Filteraggregat (20) mit mindestens einem an seiner Oberseite angeordneten Fortluftstutzen (29).

7. Lüftungsanlage nach Anspruch 6, **gekennzeichnet durch** ein auf das Filteraggregat (20) aufsteckbares, mit dessen Fortluftstutzen (29) korrespondierendes Wärmetauscheraggregat (30), welches mindestens einen Fortluftstutzen (37) sowie Frischluft-Eintrittsöffnungen und auf der Oberseite angeordnete Frischluft-Austrittstutzen (39) für jede Lüftungsstelle aufweist.

8. Lüftungsanlage nach Anspruch 7, **gekennzeichnet durch** ein neben dem Filteraggregat (20) über dem Basisaggregat (10) angeordnetes Frischluftregister (25), welches mit unten am Wärmetauscheraggregat (30) vorhandenen Frischluft-Eintrittsöffnungen korrespondiert.

9. Lüftungsanlage nach Anspruch 7, **gekennzeichnet durch** ein auf das Wärmetauscheraggregat (30) aufsteckbares, mit dessen Frischluft-Austrittsstutzen (39) korrespondierendes Frischluft-Förderaggregat (40), welches für jede Lüftungsstelle einen Frischluftventilator (42) und einen Frischluftstutzen (49) aufweist.

10. Lüftungsanlage nach Anspruch 9, **dadurch gekennzeichnet, dass** jeder Frischluftventilator (42) zusammen mit einer eingangsseitigen Rückstauklappe (45) in einer schallgedämmten Kammer (43) angeordnet ist.

11. Basisaggregat (10) für eine Lüftungsanlage nach Anspruch 1, **dadurch gekennzeichnet, dass** es mehrere nebeneinanderstehende, gleichartige Ventilator-Untereinheiten (11) umfasst, die je mindestens einem Abluftventilator (12), einen Abluftanschluss (18, 3) und einen an der Oberseite des Aggregats angeordneten Fortluftstutzen (19) aufweisen, wobei die Abluftanschlüsse (18, 3) und die Fortluftstutzen (19) der Untereinheiten (11) je in Reihe nebeneinander angeordnet sind.

## Claims

1. Ventilation system for the operation of several ventilation points which consist of part aggregates that are connected with one another, such as for example filters, heat exchangers etc., **characterised in that** at least one additional aggregate (5, 20, 30, 40) is located in a tower-shaped fashion above a base aggregate (10) for a group of ventilation points, whereby the same is closely connected with the aid of stackable air inlets (19, 29, 39), and whereby the base aggregate (10) for each ventilation point incorporates an exhaust fan (12) as well as at least one exhaust connection (18, 3) each and one feed air inlet (19) each located upon the surface of the aggregate.

2. Ventilation system according to Claim 1, **characterised in that** the base aggregate (10) incorporates several similar fan sub-units (11) that are located adjacent to one another, whereby the exhaust connections (18, 3) and the feed air connections (19) of the same are positioned in rows next to one another.

3. Ventilation system according to Claim 2, **characterised in that** the exhaust fan (12) within each sub-unit (11) is co-operatively positioned with a shut-off flap (15) within a sound-isolated chamber (13) on the exhaust side.

4. Ventilation system according to Claim 1, **characterised in that** the base aggregate (10) incorporates an exhaust connection (18) upon the surface of a further exhaust connection (3) for each ventilation point, whereby the same is located at the side for optional operation.

5. Ventilation system according to Claim 1, **characterised in that** the same incorporates a feed air collection register (5) which can be stacked onto the base aggregate (10) with its feed air connection (19) and which co-operates with the same.

6. Ventilation system according to Claim 1, **characterised in that** the same incorporates a filter aggregate (20) that can be stacked onto the base aggregate (10) and which co-operates with the feed air inlet (19), whereby the same incorporates at least one feed air inlet (29) located upon the surface of the same.

7. Ventilation system according to Claim 6, **characterised in that** the same incorporates a heat exchanger aggregate (30) that can be stacked onto the filter aggregate (20) and which co-operates with the feed air inlet (29), whereby the same incorporates at least one feed air inlet (37) as well as fresh air inlet openings and fresh air outlets (39) for each ventilation point upon the surface of the same.

8. Ventilation system according to Claim 7, **characterised in that** it incorporates a fresh air register (25) next to the filter aggregate (20) and above the base aggregate (10), whereby the same co-operates with the fresh air inlet openings that are located at the bottom of the heat exchanger aggregate (30).

9. Ventilation system according to Claim 7, **characterised in that** the same incorporates a fresh air feed aggregate (40) that can be stacked onto the heat exchanger aggregate (30) and which co-operates with the fresh air outlets (39) of the same, whereby the same incorporates a fresh air fan (42) and a fresh air inlet (49) for each ventilation point.

10. Ventilation system according to Claim 9, **characterised in that** each of the fresh air fans (42) is co-operatively located next to one shut-off flap (45) within a sound-isolated chamber (43) on the inlet side.

11. Base aggregate (10) for a ventilation system according to Claim 1, **characterised in that** the same incorporates several similar fan sub-units (11) that are located next to one another, which each incorporate at least one exhaust air fan (12), one exhaust air connection (18, 3), and one feed air inlet (19) located upon the surface of the aggregate, whereby the exhaust air connections (18, 3) and the feed air inlets (19) of the sub-unit (11) are positioned next to one another in a row.

## Revendications

1. Dispositif de ventilation permettant de commander plusieurs emplacements de ventilation, qui se compose d'agrégats reliés entre eux, comme des ventilateurs, des filtres, des échangeurs de chaleur, etc.,
**caractérisé en ce qu'**au moins un agrégat supplémentaire (5, 20, 30, 40) est monté en forme de tour, au-dessus d'un agrégat de base (10) d'un groupe d'emplacements de ventilation, et est relié directement par des tubulures d'admission d'air enfichables (19, 29, 39), l'agrégat de base (10) présentant, pour chaque emplacement de ventilation, un ventilateur aspirant (12) ainsi que respectivement au moins un raccord d'air d'échappement (18, 3) et respectivement une tubulure d'air d'évacuation (19) disposée du côté supérieur de l'agrégat.

2. Dispositif de ventilation selon la revendication 1, **caractérisé en ce que** l'agrégat de base (10) comprend plusieurs sous-unités de ventilateur (11) de même type et disposées les unes à côté des autres, dont les raccords d'air d'échappement (18, 3) et tubulures d'air d'évacuation (19) sont respectivement disposées en rang les uns à côté des autres.

3. Dispositif de ventilation selon la revendication 2, **caractérisé en ce que** le ventilateur aspirant (12) est disposé dans chaque sous-unité (11), avec une soupape de retenue (15) côté sortie, au sein d'une chambre insonorisée (13).

4. Dispositif de ventilation selon la revendication 1, **caractérisé en ce que**, au niveau de l'agrégat de base (10) pour chaque emplacement de ventilation sont prévus un raccord d'air d'échappement (18) sur le côté supérieur et un autre raccord d'air d'échappement (3) disposé latéralement pour permettre une utilisation sélective.

5. Dispositif de ventilation selon la revendication 1, **caractérisé par** un registre collecteur d'air évacué (5), enfichable sur l'agrégat de base (10) et correspondant avec sa tubulure d'air d'évacuation (19).

6. Dispositif de ventilation selon la revendication 1, **caractérisé par** un agrégat de filtre (20) enfichable sur l'agrégat de base (10) et correspondant avec sa tubulure d'air d'évacuation (19), comportant au moins une tubulure d'air d'évacuation disposée sur son côté supérieur.

7. Dispositif de ventilation selon la revendication 6, **caractérisé par** un agrégat d'échangeur de chaleur (30) enfichable sur l'agrégat de filtre (20) et correspondant avec sa tubulure d'air d'évacuation (29), lequel agrégat d'échangeur de chaleur présente, pour chaque emplacement de ventilation, au moins une tubulure d'air d'évacuation (37) et des ouvertures d'admission d'air frais, et des tubulures de sortie d'air frais (39) disposées sur le côté supérieur.

8. Dispositif de ventilation selon la revendication 7, **caractérisé par** un registre d'air frais (25) disposé à côté de l'agrégat de filtre (20) au-dessus de l'agrégat de base (10), qui correspond avec les ouvertures d'admission d'air frais qui existent sous l'agrégat d'échangeur de chaleur (30).

9. Dispositif de ventilation selon la revendication 7, **caractérisé par** un agrégat d'alimentation en air frais (40) enfichable sur l'agrégat d'échangeur de chaleur (30) et correspondant avec sa tubulure de sortie d'air frais (39), qui présente pour chaque emplacement de ventilation un ventilateur d'air frais (42) et une tubulure d'air frais (49).

10. Dispositif de ventilation selon la revendication 9, **caractérisé en ce que** chaque ventilateur d'air frais (42) est agencé avec une soupape de retenue (45) côté entrée, au sein d'une chambre insonorisée (43).

11. Agrégat de base (10) pour un dispositif de ventilation selon la revendication 1, **caractérisé en ce qu'**il comprend plusieurs sous-unités de ventilateur (11) de même type et disposées les unes à côté des autres, lesquelles présentent au moins un ventilateur aspirant (12), un raccord d'air d'échappement (18, 3) et une tubulure d'air d'évacuation (19) disposée du côté supérieur de l'agrégat, les raccords d'air d'échappement (18, 3) et les tubulures d'air d'évacuation (19) des sous-unités (11) étant respectivement disposées en rang les uns à côtés des autres.
